(19) **Europäisches Patentamt / European Patent Office / Office européen des brevets**

(11) **EP 4 787 394 A1**

(12) **EUROPEAN PATENT APPLICATION**
published in accordance with Art. 153(4) EPC

(43) Date of publication:
05.08.2026 Bulletin 2026/32

(21) Application number: 23954383.8

(22) Date of filing: 29.09.2023

(51) International Patent Classification (IPC):
$H01B\ 1/08$ (2006.01)  $H01B\ 13/00$ (2006.01)
$H01M\ 10/0562$ (2010.01)

(52) Cooperative Patent Classification (CPC):
H01B 1/08; H01B 13/00; H01M 10/0562;
Y02E 60/10

(86) International application number:
PCT/JP2023/035746

(87) International publication number:
WO 2025/069417 (03.04.2025 Gazette 2025/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicants:
• NGK Insulators, Ltd.
Nagoya-shi, Aichi 467-8530 (JP)
• Nagoya Institute Of Technology
Nagoya-shi, Aichi 466-8555 (JP)

(72) Inventors:
• YAGI, En
Nagoya-shi, Aichi 467-8530 (JP)

• NISHIZAKI, Tsutomu
Nagoya-shi, Aichi 467-8530 (JP)
• TAKAHASHI, Haruto
Nagoya-shi, Aichi 467-8530 (JP)
• OYA, Masahiro
Nagoya-shi, Aichi 467-8530 (JP)
• YOSHIDA, Toshihiro
Nagoya-shi, Aichi 467-8530 (JP)
• MIYAZAKI, Reona
Nagoya-Shi, Aichi 466-8555 (JP)

(74) Representative: Mewburn Ellis LLP
Aurora Building
Counterslip
Bristol BS1 6BX (GB)

(54) **SOLID ELECTROLYTE, METHOD FOR MANUFACTURING SOLID ELECTROLYTE, AND BATTERY**

(57) A solid electrolyte is composed primarily of a component expressed by a composition formula of $Na_{a+d}M_bX_cA_eO_f$ by using values a to f that are greater than 0, where M is an element serving as a trivalent cation, X is a halogen element, and A is a sulfur element or a phosphorus element, in which $0.8c \leq (a + 3b) \leq 1.2c$ and $1.6f \leq (d + n \times e) \leq 2.4\,f$ are satisfied, where n is 4 or 6 when A is a sulfur element and n is 5 when A is a phosphorus element. Accordingly, it is possible to provide a solid electrolyte with high ion conductivity.

FIG. 1

**Description**

**TECHNICAL FIELD**

The present invention relates to a solid electrolyte and a battery.

**BACKGROUND ART**

In recent years, with the development of portable equipment such as personal computers and mobile phones, demand for batteries serving as power sources of such portable equipment is increasing considerably. The batteries used for such purposes conventionally use organic electrolyte solutions that contain electrolytes dissolving in inflammable organic solvents, as media for transporting ions. The batteries containing the organic electrolyte solutions may cause safety concerns. In view of this, all-solid-state batteries that use solid electrolytes instead of organic electrolyte solutions are under development in order to ensure intrinsic safety. Since the solid electrolytes are incombustible materials, all-solid-state batteries achieve a high level of safety.

Meanwhile, demand for large-scale lithium-ion batteries that realize electric vehicles (EVs) capable of decarbonization and a stable supply of renewable energy is rapidly increasing in response to a rapid change in social realities toward achieving carbon neutrality in these days. Thus, supply concerns and rising costs of Li have also become a problem, in addition to conventional rare elements such as Co and Ni.

In view of this, Japanese Patent Application Laid-Open No. 2023-48155 (Document 1) and Japanese Patent No. 7230772 (Document 2) disclose solid electrolytes serving as Na ion conductors. The solid electrolyte according to Document 1 contains a compound expressed by $Na_xM^1_{2-(y+z)}M^2_yM^3_z(AO_4)_3$, where $M^1$, $M^2$, and $M^3$ are each independently Hf, Mg, Sc, In, Y, Ca, or Zr, and A is P, Si, S, or a combination of them. In the production of the solid electrolyte according to Document 2, an Na source, a Y source, and an Si source are mixed and fired to form a fired body of $Na_5YSi_4O_{12}$, which is then sintered after molding. Before sintering, $Na_3YSi_3O_9$ power is added. International Publication WO2022/210482 (Document 3) discloses an Li-ion solid electrolyte expressed by a composition formula of $Li_{a+d}M_bX_cA_eO_f$. In this composition formula, M is an element serving as a trivalent cation, X is a halogen element, and A is a sulfur element or a phosphorus element.

In the production of the solid electrolytes according to Documents 1 and 2, high-temperature sintering (heat treatment) is necessary for densification and other purposes. In the production of batteries, when a solid electrolyte prior to sintering is mixed with a positive active material or a negative active material and then sintered, reactions between the solid electrolyte and the active material may cause high resistance. For this reason, there is demand for new Na-ion solid electrolytes that can be densified by processes such as press forming and have high ion conductivity.

**SUMMARY OF THE INVENTION**

The present invention is intended for a solid electrolyte, and it is an object of the present invention to provide a solid electrolyte with high ion conductivity.

Aspect 1 of the invention is a solid electrolyte composed primarily of a component expressed by a composition formula of $Na_{a+d}M_bX_cA_eO_f$ by using values a to f that are greater than 0, where M is an element serving as a trivalent cation, X is a halogen element, and A is a sulfur element or a phosphorus element, in which $0.8c \leq (a + 3b) \leq 1.2c$ and $1.6f \leq (d + n \times e) \leq 2.4f$ are satisfied, where n is 4 or 6 when A is a sulfur element, and n is 5 when A is a phosphorus element.

According to the invention, it is possible to provide a solid electrolyte with high ion conductivity.

Aspect 2 of the invention is the solid electrolyte according to Aspect 1, in which $0 < e/(c + e) \leq 0.5$ is satisfied in the composition formula.

Aspect 3 of the invention is the solid electrolyte according to Aspect 1 or 2, in which in the composition formula, $0.8d \leq 2e \leq 1.2d$ is satisfied when A is a sulfur element, or $0.8d \leq e \leq 1.2d$ is satisfied when A is a phosphorus element.

Aspect 4 of the invention is the solid electrolyte according to any one of Aspects 1 to 3, in which in the composition formula, A is a sulfur element and n is 6.

Aspect 5 of the invention is the solid electrolyte according to any one of Aspects 1 to 4, in which in the composition formula, M is an aluminum element and X is a fluorine element.

Aspect 6 of the invention is the solid electrolyte according to any one of Aspects 1 to 5, in which in measurement conducted by an X-ray diffractometer using a CuKα ray, a half-value width of a peak detected within a range of 2θ from 31° to 35° is greater than or equal to 0.4°.

Aspect 7 of the invention is a method of producing a solid electrolyte. The method includes a) preparing a compound expressed by a composition formula of $Na_aM_bX_c$ and a compound expressed by a composition formula of $Na_dA_eO_f$ by using values a to f that are greater than 0, where M is an element serving as a trivalent cation, X is a halogen element, A is a sulfur element or a phosphorus element, the values a to f satisfy $0.8c \leq (a + 3b) \leq 1.2c$ and $1.6f \leq (d + n \times e) \leq$

2.4f, n is 4 or 6 when A is a sulfur element, and n is 5 when A is a phosphorus element, and b) subjecting $Na_aM_bX_c$ and $Na_dA_eO_f$ to a mechanical milling process. In the operation b), a ratio of the amount of substance of $Na_dA_eO_f$ to a total of the amount of substance of $Na_aM_bX_c$ and the amount of substance of $Na_dA_eO_f$ is lower than or equal to 85%.

Aspect 8 of the invention is a method of producing a solid electrolyte. The method includes a) preparing a first compound that is NaX, a second compound that is $MX_3$, and a third compound composed of Na, A, and O, where X is a halogen element, M is an element serving as a trivalent cation, and A is a sulfur element or a phosphorus element, and b) subjecting the first compound, the second compound, and the third compound to a mechanical milling process. In the operation a), $0.8c \leq (a + 3b) \leq 1.2c$ and $1.6f \leq (d + n \times e) \leq 2.4f$ are satisfied when a ratio of the amounts of substance of Na, M, and X in a mixture of the first compound and the second compound and the amounts of substance of Na, A, and O in the third compound is expressed as a:b:c:d:e:f by using values a to f that are greater than 0, where n is 4 or 6 when A is a sulfur element, and n is 5 when A is a phosphorus element, and $0 < e/(c + e) \leq 0.5$ is further satisfied.

Aspect 9 of the invention is the method of producing a solid electrolyte according to Aspect 7 or 8, in which $0.8d \leq 2e \leq 1.2d$ is satisfied when A is a sulfur element, or $0.8d \leq e \leq 1.2d$ is satisfied when A is a phosphorus element.

Aspect 10 of the invention is the method of producing a solid electrolyte according to any one of Aspects 7 to 9, in which A is a sulfur element, and n is 6.

Aspect 11 of the invention is the method of producing a solid electrolyte according to any one of Aspects 7 to 10, in which M is an aluminum element, and X is a fluorine element.

Aspect 12 of the invention is a battery that includes a positive electrode, a negative electrode, and an electrolyte layer provided between the positive electrode and the negative electrode. The solid electrolyte according to any one of Aspects 1 to 6 is contained in at least one of the positive electrode, the negative electrode, or the electrolyte layer.

These and other objects, features, aspects and advantages of the present invention will become more apparent from the following detailed description of the present invention when taken in conjunction with the accompanying drawings.

## BRIEF DESCRIPTION OF DRAWINGS

Fig. 1 is a longitudinal section view of an all-solid-state secondary battery.
Fig. 2 is a flowchart showing a procedure for producing a solid electrolyte.
Fig. 3 is a diagram showing an X-ray diffraction pattern obtained from the solid electrolyte.
Fig. 4 is a diagram showing the relationship between the ratio of the amount of substance of $Na_2SO_4$ and ion conductivity at ambient temperature.
Fig. 5 is a diagram showing the relationship between the ratio of the amount of substance of $Na_2SO_4$ and ion conductivity at 120°C.
Fig. 6 is a flowchart showing another example of the production of the solid electrolyte.

## DESCRIPTION OF EMBODIMENTS

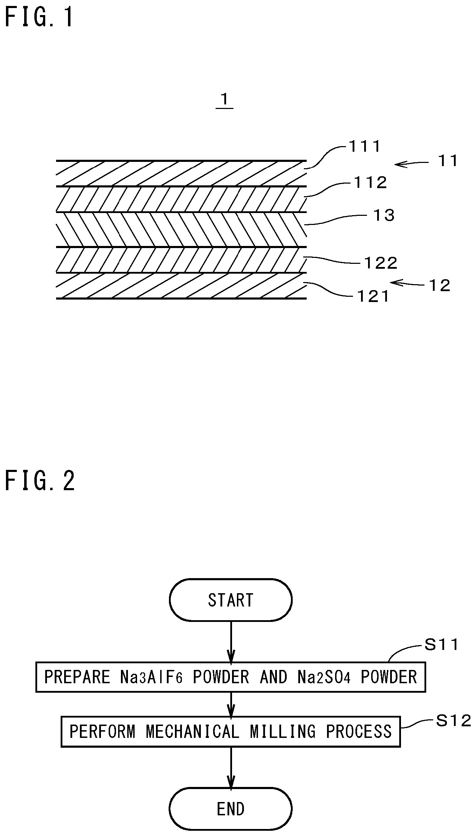

Fig. 1 is a longitudinal section view showing an all-solid-state sodium-ion secondary battery 1 (hereinafter, simply referred to as the "all-solid-state secondary battery 1"). The all-solid-state secondary battery 1 includes a positive electrode 11, a solid electrolyte layer 13, and a negative electrode 12 in order from above in Fig. 1. That is, the solid electrolyte layer 13 is positioned between the positive electrode 11 and the negative electrode 12. The solid electrolyte layer 13 serves also as a separator layer. The positive electrode 11 includes a current collector 111 and a positive electrode layer 112. The positive electrode layer 112 includes a positive active material. The negative electrode 12 includes a current collector 121 and a negative electrode layer 122. The negative electrode layer 122 includes a negative active material.

One example of the positive active material of the positive electrode layer 112 is $Na(Fe, Mn)O_2$. Other examples of the positive active material include layered compounds such as $NaCoO_2$, $NaNiO_2$, $NaMnO_2$, $Na(Ni, Co, Mn)O_2$, $NaFeO_2$, and $Na(Ni, Mn, Fe, Ti)O_2$, spinel-type compounds such as $NaMn_2O_4$, polyanion-type compounds such as $Na_3V_2(PO_4)_3$, $Na_2Fe_2(SO_4)_3$, $Na_2Mn_2(SO_4)_3$, $NaFePO_4$, $NaMnPO_4$, $Na_4Fe_7(PO_4)_6$, and $Na_3V(PO_3)_3N$, and pyrophosphate compounds such as $Na_2MnP_2O_7$ and $Na_2FeP_2O_7$. In addition to the positive active material, the positive electrode layer 112 includes a solid electrolyte, which will be described later. The positive electrode layer 112 may further include an electron conductive agent (e.g., carbon black). One example of the positive electrode layer 112 is obtained by integrating those substances by the application of pressure or other means.

One example of the negative active material of the negative electrode layer 122 is hard carbon. Other examples of the negative active material include metal such as Na, In, Sn, and Sb, alloys of the metal and Na, graphite, SiO, $TiO_2$, $Fe_2O_3$, $Na_{4/3}Ti_{5/3}O_4$, $Na_2Ti_6O_{13}$, $Na_{0.66}[Li_{0.22}Ti_{0.78}]O_2$, $Na_3V_2(PO_4)_3$, SnO, and $Li_4Ti_5O_{12}$. In addition to the negative active material, the negative electrode layer 122 includes a solid electrolyte, which will be described later. The negative electrode layer 122 may further include an electron conductive agent (e.g., carbon black). One example of the negative electrode layer 122 is obtained by integrating those substances by the application of pressure or other means.

The configurations and materials of the positive electrode 11 and the negative electrode 12 in the all-solid-state secondary battery 1 are not limited to those described above, and may be any of other various configurations and materials.

The solid electrolyte layer 13 is composed of a solid electrolyte according to one embodiment of the present invention (hereinafter, also referred to as the "present solid electrolyte"), or includes the present solid electrolyte. The present solid electrolyte is a sodium-ion conductive material. For example, the present solid electrolyte may be a mixture (or a synthetic substance) of a compound that contains a sodium element (Na), an element (M) serving as a trivalent cation, and a halogen element (X) and a compound that contains a sodium element, a sulfur (S) or phosphorus (P) element, and an oxygen element (O). As will be described later, the present solid electrolyte is expressed by a composition formula of $Na_{a+d}M_bX_cA_eO_f$ by using values a to f that are greater than 0, where M is an element serving as a trivalent cation, X is a halogen element, and A is a sulfur element or a phosphorus element, in which $0.8c \leq (a + 3b) \leq 1.2c$ and $1.6f \leq (d + n \times e) \leq 2.4f$ are satisfied, where n is 4 or 6 when A is a sulfur element and n is 5 when A is a phosphorus element. The present solid electrolyte has high ion conductivity (typically sodium ion conductivity). Besides, the present solid electrolyte is incombustible and chemically stable.

A preferable example of the present solid electrolyte is a mixture of $Na_3AlF_6$ (hexafluoro sodium aluminate) that contains a sodium element, an aluminum element, and a fluorine element, and inorganic salt $Na_2SO_4$ (sodium sulfate) or $NaPO_3$ that contains a sodium element and a sulfur or phosphorus element. The present solid electrolyte that contains $Na_3AlF_6$ and either $Na_2SO_4$ or $NaPO_3$ has higher ion conductivity than $Na_3AlF_6$ as a simple substance. The reason for this is not clear, but one conceivable factor is that an interface layer with high ion conductivity is formed at the interface of particles between $Na_3AlF_6$ and either $Na_2SO_4$ or $NaPO_3$ by a mechanical milling process as will be described later. The present solid electrolyte maintains high ion conductivity within a higher-temperature range, for example, at 120°C. That is, the present solid electrolyte achieves high-temperature stability.

Fig. 2 is a flowchart showing a procedure for producing the present solid electrolyte. The following description is given of processing for mixing $Na_3AlF_6$ and $Na_2SO_4$ to produce the present solid electrolyte, but the same also applies to the case of, for example, mixing $Na_3AlF_6$ and $NaPO_3$ to produce the present solid electrolyte. First, $Na_3AlF_6$ powder and $Na_2SO_4$ powder are prepared (step S11). In the preparation of the $Na_3AlF_6$ powder, for example, commercial NaF (sodium fluoride) powder and commercial $AlF_3$ (aluminum fluoride) powder are weighed and mixed together. Then, the resultant mixture is subjected to heat treatment (e.g., at 1050°C) and thereafter pulverized into small particles to obtain the $Na_3AlF_6$ powder. The $Na_3AlF_6$ powder may be generated by any other method. The $Na_2SO_4$ powder is commercially available (the same applies to the $NaPO_3$ powder). It goes without saying that the $Na_2SO_4$ powder may be generated by a known method (the same applies to the $NaPO_3$ powder). Step S11 is the step of preparing $Na_aM_bX_c$ and $Na_dA_eO_f$, which will be described later.

Then, the $Na_3AlF_6$ powder and the $Na_2SO_4$ powder are mixed and thereafter subjected to a mechanical milling process (step S12). In one example of the mechanical milling process, a planetary ball mill is used. The planetary ball mill is capable of generating very high impact energy because a stage with a pot placed thereon revolves while the pot rotates on its axis. The mechanical milling process may be conducted using any other type of pulverizer. Through the mechanical milling process described above, powder of the present solid electrolyte is obtained for use in the positive electrode layer 112, the negative electrode layer 122, or the solid electrolyte layer 13. In the present processing example, the mechanical milling process is conducted at ordinary temperatures, but conditions for the mechanical milling process such as temperature may be changed as appropriate. Step S12 is the step of subjecting $Na_aM_bX_c$ and $Na_dA_eO_f$ to the mechanical milling process.

In step S12, it is preferable that the ratio of the amount of substance of $Na_2SO_4$ to the total of the amount of substance of $Na_3AlF_6$ and the amount of substance of $Na_2SO_4$ is higher than 0% and lower than or equal to 85%. This more reliably realizes the condition that the present solid electrolyte has a higher ion conductivity than $Na_3AlF_6$ as a single substance at both ambient temperature and high temperatures (e.g., at 120°C). As will be shown in experiments described later, the present solid electrolyte that contains $Na_3AlF_6$ and $Na_2SO_4$ has ion conductivity of higher than or equal to $1.0 \times 10^{-5}$ S/cm at 120°C if the ratio of the amount of substance of $Na_2SO_4$ is in the range of 15% to 85%. In order to further increase the ion conductivity of the present solid electrolyte, it is preferable that the ratio of the amount of substance of $Na_2SO_4$ is in the range of 20% to 75%. The same also applies to the case in which $NaPO_3$ is used instead of $Na_2SO_4$.

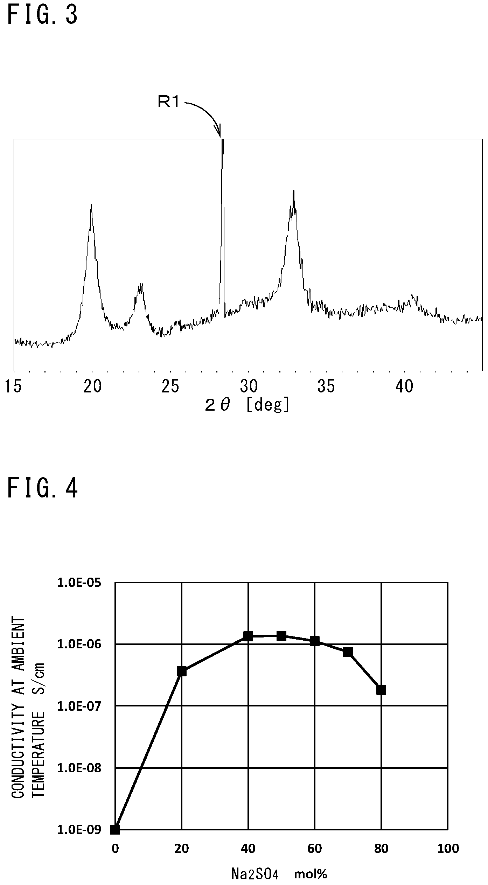

Fig. 3 is a diagram showing an X-ray diffraction (XRD) pattern obtained by measurement of the present solid electrolyte conducted by a powder X-ray diffraction method. The XRD pattern shown in Fig. 3 is obtained from a solid electrolyte that is produced by a mechanical milling process on condition that the ratio of the amount of substance of $Na_2SO_4$ is 50% (Experiment 4 described later). In this measurement, a $CuK\alpha$ ray is used as a radiation source of the X-ray diffractometer. In Fig. 3, the peak marked with R1 is a peak that originates from Si powder serving as an internal standard sample. As shown in Fig. 3, in the solid electrolyte produced by the mechanical milling process, peaks in the X-ray diffraction pattern are all broad (the same also applies to the solid electrolyte that contains $Na_3AlF_6$ and $NaPO_3$). This is

considered because very high impact energy generated by the mechanical milling process may cause pulverization or partial amorphization of $Na_3AlF_6$ and $Na_2SO_4$ particles, or because the crystal structure may become disordered due to distortion or dislocation in crystals. Since such phenomena remarkably occur in particular at the interface of these particles, the present solid electrolyte is considered to have higher ion conductivity. Therefore, in order to increase the ion conductivity of the present solid electrolyte, it is preferable that the half-value widths of peaks detected within the range of $2\theta$ from 31° to 35° in the X-ray diffraction pattern are greater than or equal to 0.4° (the same also applies to the solid electrolyte that contains $Na_3AlF_6$ and $NaPO_3$). There are no particular limitations on the upper limit for the half-value widths, and the upper limit may, for example, be 3.0°. Note that the present solid electrolyte may be amorphized.

Next, experiments on the solid electrolyte is described. The following experiments were conducted in a dry room or in a glove box with a dew point of less than or equal to -40°C.

Experiment 1

Commercial NaF (sodium fluoride) powder and commercial $AlF_3$ (aluminum fluoride) powder were prepared as raw materials. These raw materials were weighed and mixed so that the ratio of NaF and $AlF_3$ (the ratio of the amounts of substance) became 3:1. A resultant mixture was subjected to heat treatment at 1050°C and thereafter pulverized in a mortar into $Na_3AlF_6$ powder. The $Na_3AlF_6$ powder was subjected to a mechanical milling process using a planetary ball mill to obtain solid electrolyte powder that contained only the $Na_3AlF_6$ powder.

Experiment 2

In addition to the $Na_3AlF_6$ powder described above, commercial $Na_2SO_4$ powder was prepared. These raw materials were weighed so that the ratio of $Na_3AlF_6$ and $Na_2SO_4$ (the ratio of the amounts of substance) became 80:20, and were subjected to a mechanical milling process using a planetary ball mill to obtain $Na_3AlF_6$-$Na_2SO_4$ powder as solid electrolyte powder.

Experiment 3

Solid electrolyte powder was obtained through the same processing as in Experiment 2, except that $Na_3AlF_6$ and $Na_2SO_4$ were weighed in the ratio of 60:40 (the ratio of the amounts of substance).

Experiment 4

Solid electrolyte powder was obtained through the same processing as in Experiment 2, except that $Na_3AlF_6$ and $Na_2SO_4$ were weighed in the ratio of 50:50 (the ratio of the amounts of substance).

Experiment 5

Solid electrolyte powder was obtained through the same processing as in Experiment 2, except that $Na_3AlF_6$ and $Na_2SO_4$ were weighed in the ratio of 40:60 (the ratio of the amounts of substance).

Experiment 6

Solid electrolyte powder was obtained through the same processing as in Experiment 2, except that $Na_3AlF_6$ and $Na_2SO_4$ were weighed in the ratio of 30:70 (the ratio of the amounts of substance).

Experiment 7

Solid electrolyte powder was obtained through the same processing as in Experiment 2, except that $Na_3AlF_6$ and $Na_2SO_4$ were weighed in the ratio of 20:80 (the ratio of the amounts of substance).

Experiment 8

In addition to the $Na_3AlF_6$ powder described above, commercial $NaPO_3$ powder was prepared. Then, $Na_3AlF_6$ and $NaPO_3$ were weighed in the ratio of 50:50 (the ratio of the amounts of substance) and subjected to a mechanical milling process using a planetary ball mill so as to obtain $Na_3AlF_6$-$NaPO_3$ powder as solid electrolyte powder.

Measurement of Ion Conductivity

The solid electrolyte powder was introduced into a mold configured by a sleeve made of resin and upper and lower punches made of stainless steel (SUS), and was subjected to uniaxial press molding by the application of pressure at 150 MPa. The upper and lower punches were connected to conductors, and ion conductivity was calculated by conducting impedance measurement at a temperature ranging from ambient temperature to 120°C.

X-ray Power Diffractometry

The solid electrolyte powder was analyzed by an X-ray diffractometer (XRD) using a CuKα ray to obtain an X-ray diffraction pattern. The obtained X-ray diffraction pattern was subjected to automatic fitting using XRD data analysis software JADE to calculate the half-value widths of peaks.

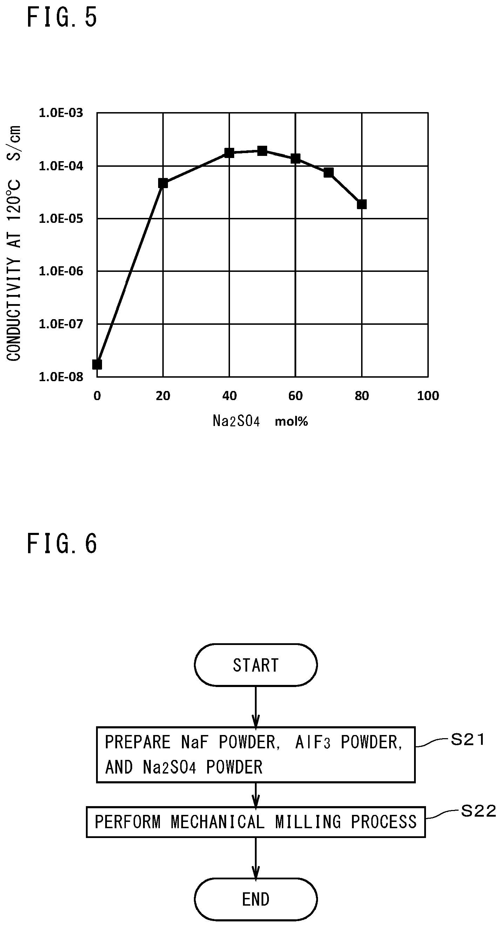

Table 1 shows the ratios of the amounts of substance of $Na_3AlF_6$ and either $Na_2SO_4$ or $NaPO_3$ in the solid electrolytes according to Experiments 1 to 8, ion conductivity at ambient temperature, and ion conductivity at 120°C. Table 1 also shows, for some Experiments, the half-value widths of peaks with maximum intensities within the range of 31° to 35° obtained by X-ray diffractometry. In Table 1, Experiments 2 to 8 correspond to examples according to the present invention, and Experiment 1 corresponds to a comparative example. Figs. 4 and 5 are diagrams showing the relationship between the ion conductivity and the ratio (mol%) of the amount of substance of $Na_2SO_4$ to the total of the amount of substance of $Na_3AlF_6$ and the amount of substance of $Na_2SO_4$. Fig. 4 shows the ion conductivity at ambient temperature, and Fig. 5 shows the ion conductivity at 120°C.

Table 1

| Experiment No. | Base Material | | Additive | | Ion Conductivity @Ambient Temperature | Ion Conductivity @120°C | Half-Value Width 31-35° |
| --- | --- | --- | --- | --- | --- | --- | --- |
| | Compound | Blended Amount | Compound | Blended Amount | | | |
| - | - | mol% | - | mol% | S/cm | S/cm | deg. |
| 1 | $Na_3AlF_6$ | 100 | None | 0 | 1.0E-09 | 1.7E-08 | --- |
| 2 | $Na_3AlF_6$ | 80 | $Na_2SO_4$ | 20 | 3.7E-07 | 4.7E-05 | 0.91 |
| 3 | $Na_3AlF_6$ | 60 | $Na_2SO_4$ | 40 | 1.3E-06 | 1.7E-04 | 0.94 |
| 4 | $Na_3AlF_6$ | 50 | $Na_2SO_4$ | 50 | 1.4E-06 | 1.9E-04 | 0.89 |
| 5 | $Na_3AlF_6$ | 40 | $Na_2SO_4$ | 60 | 1.1E-06 | 1.4E-04 | 0.98 |
| 6 | $Na_3AlF_6$ | 30 | $Na_2SO_4$ | 70 | 7.5E-07 | 7.4E-05 | --- |
| 7 | $Na_3AlF_6$ | 20 | $Na_2SO_4$ | 80 | 1.8E-07 | 1.9E-05 | --- |
| 8 | $Na_3AlF_6$ | 50 | $NaPO_3$ | 50 | 1.4E-08 | 9.3E-06 | --- |

The solid electrolyte powder that contained $Na_2SO_4$ according to Experiments 2 to 7 and the solid electrolyte powder that contained $NaPO_3$ according to Experiment 8 had higher ion conductivity at both ambient temperature and 120°C than the solid electrolyte powder that contained neither $Na_2SO_4$ nor $NaPO_3$ according to Experiment 1. To be more specific, the ion conductivity at ambient temperature and at 150°C increased with an increase in the ratio of the amount of substance of $Na_2SO_4$ within a range in which the ratio of the amount of substance of $Na_2SO_4$ to the total of the amount of substance of $Na_3AlF_6$ and the amount of substance of $Na_2SO_4$ was relatively low (e.g., within the range of 50% or less). As the ratio of the amount of substance of $Na_2SO_4$ increased further, the ion conductivity decreased. However, even in Experiment 7 in which the ratio of the amount of substance of $Na_2SO_4$ was 80%, the ion conductivity was sufficiently higher than the ion conductivity of the solid electrolyte powder according to Experiment 1. Thus, it is conceivable that, if the ratio of the amount of substance of $Na_2SO_4$ is higher than 0% and lower than or equal to 85%, it is possible to ensure higher ion conductivity than that of the solid electrolyte powder according to Experiment 1.

In Experiment 2 in which the ratio of the amount of substance of $Na_2SO_4$ was 20%, the ion conductivity at ambient temperature was $3.7 \times 10^{-7}$ S/cm, and the ion conductivity at 120°C was $4.7 \times 10^{-5}$ S/cm. In Experiment 7 in which the ratio of the amount of substance of $Na_2SO_4$ was 80%, the ion conductivity at ambient temperature was $1.8 \times 10^{-7}$ S/cm, and the ion conductivity at 120°C was $1.9 \times 10^{-5}$ S/cm. Thus, it is conceivable that, if the ratio of the amount of substance of $Na_2SO_4$ is in the range of 15% to 85%, it is possible to ensure the ion conductivity of approximately $1.0 \times 10^{-7}$ S/cm or higher at ambient temperature and the ion conductivity of approximately $1.0 \times 10^{-5}$ S/cm or higher at 120°C. In order to further increase the ion conductivity, the ratio of the amount of substance of $Na_2SO_4$ is preferably in the range of 20% to 75%. The solid electrolyte powder according to Experiments 2 to 8 maintained high ion conductivity even after retained at 120°C for some time, e.g., for 15 hours. In this way, the solid electrolyte powder according to the examples of the present invention achieved high-temperature stability.

The solid electrolyte powder according to Experiments 2 to 5 exhibited X-ray diffraction patterns with very broad peaks, in which the half-value widths of peaks with maximum intensities detected within the range of 31° to 35° were in the range of 0.89° to 0.98°.

Preparation of All-Solid-State Battery

Positive active material powder that was $Na(Fe, Mn)O_2$, solid electrolyte powder, and electron conductive agent powder were weighed and mixed to obtain blended powder of the positive electrode. Also, negative active material powder that was hard carbon, solid electrolyte powder, and electron conductive agent powder were weighed and mixed to obtain blended powder of the negative electrode. The solid electrolyte powder was introduced into a mold configured by a sleeve made of PEEK resin and upper and lower punches made of SUS, and was subjected to uniaxial press molding by the application of pressure at 150 MPa. The blended powder of the positive electrode was introduced on the pressed solid electrolyte powder and integrated together by the application of pressure at 150 MPa. The blended powder of the negative electrode was introduced on the opposite side of the pressed solid electrolyte powder to the positive electrode and integrated together by the application of pressure at 150 MPa. In this way, a battery configured by a positive electrode layer, a solid electrolyte layer, and a negative electrode layer was prepared.

Charge/Discharge Test

After conductors were connected to the upper and lower punches, the battery described above was placed stationary in a constant-temperature bath kept at 120°C in order to conduct a cc-cv (constant current-constant voltage) charge/discharge test. In the charge/discharge test, the cc current density was set to 300 $\mu$A/cm$^2$, the cv current density was set to 30 $\mu$A/cm$^2$, and the cutoff voltage was set in the range of 4.25V to 1.50V. In a battery using the solid electrolyte powder according to Experiment 1 (comparative example), the discharge capacity was less than 0 mAh/g per positive active material. That is, resistance was too high for charging and discharging. In a battery using the solid electrolyte powder according to Experiment 4 (example), the discharge capacity was 25 mAh/g per positive active material.

In the present embodiment described above, the present solid electrolyte is obtained by subjecting $Na_3AlF_6$ and inorganic salt of either $Na_2SO_4$ or $NaPO_3$ to a mechanical milling process. However, the present solid electrolyte may be produced by mixing an arbitrary compound that contains a sodium element (Na), an element serving as a trivalent cation, and a halogen element with arbitrary inorganic salt that contains a sodium element and a sulfur or phosphorus element. In this case, the compound described above can be expressed by a composition formula of $Na_aM_bX_c$, where M is an aluminum (Al) element or any other element serving as a trivalent cation (typically, a metallic element), X is a fluorine (F) element or any other halogen element, and a to c are values greater than 0. Here, Na, M, and X are a univalent cation, a trivalent cation, and a univalent anion, respectively, and the above-described compound is expressed by $Na_3MX_6$. In $Na_3MX_6$, a + 3b = c and a = 3b are satisfied. In addition to $Na_3AlF_6$, other examples of the compound described above include $Na_3YF_6$, $Na_3LaF_6$, $Na_3GaF_6$, $Na_3YCl_6$, $Na_3YBr_6$, $Na_3InCl_6$, and $Na_3LaI_6$.

Similarly, the inorganic salt described above can be expressed by a composition formula of $Na_dA_eO_f$, where A is a sulfur or phosphorus element, and d to f are values greater than 0. When A is a sulfur element, Na, A, and O are a univalent cation, a tetravalent or hexavalent cation, and a bivalent anion, respectively, and therefore d + 4e = 2f or d + 6e = 2f need to be satisfied. When A is a phosphorus element, Na, A, and O are a univalent cation, a pentavalent cation, and a bivalent anion, respectively, and therefore d + 5e = 2f needs to be satisfied. In other words, d + n $\times$ e = 2f needs to be satisfied, where n is 4 or 6 when A is a sulfur element, and n is 5 when A is a phosphorus element. In addition to $Na_2SO_4$ or $NaPO_3$, other examples of the inorganic salt described above include $Na_2SO_3$ (sodium sulfite) and $Na_3PO_4$ (sodium orthophosphate).

In this way, in the case where the compound that contains a sodium element (Na), an element (M) serving as a trivalent cation, and a halogen element (X) is expressed by $Na_aM_bX_c$ and inorganic salt that contains a sodium element and a sulfur or phosphorus element is expressed by $Na_dA_eO_f$, by using the values a to f that are greater than 0, the present solid electrolyte obtained by mixing the compound and the inorganic salt is expressed by a composition formula of $Na_{a+d}M_bX_cA_eO_f$. Moreover, the previously described conditions, i.e., a + 3b = c, a = 3b, and d + n $\times$ e = 2f, are satisfied, where n is 4 or 6 when A is a sulfur element, and n is 5 when A is a phosphorus element. If consideration is given to factors such as measurement errors, it is enough if $0.8c \leq (a + 3b) \leq 1.2c$, $0.8a \leq 3b \leq 1.2a$, and $1.6f \leq (d + n \times e) \leq 2.4f$ are satisfied. Preferably, $0.9c \leq (a + 3b) \leq 1.1c$, $0.9a \leq 3b \leq 1.1a$, and $1.8f \leq (d + n \times e) \leq 2.2f$ are satisfied. Accordingly, the present solid electrolyte expressed by the composition formula of $Na_{a+d}M_bX_cA_eO_f$ has high ion conductivity. As a result, it is possible to provide an all-solid-state secondary battery with high output. As will be described later, if the compound $Na_aM_bX_c$ is not generated, there is no need to satisfy $0.8a \leq 3b \leq 1.2a$.

Among the solid electrolytes, like sulfide-based ones, materials that react with moisture and generate hydrogen sulfide gas are widely known. Meanwhile, oxide-based solid electrolytes that do not generate gas such as hydrogen sulfide are also being developed widely. However, such solid electrolytes have the problem of reacting with active materials and increasing in resistance during the production of batteries because high-temperature sintering is necessary for densification in order to improve ion conductivity. In contrast, the present solid electrolyte is incombustible and chemically stable, thereby making it possible to provide an intrinsically safe ion battery. Besides, the present solid electrolyte can be densified by the pressure of press forming, not sintering. This prevents the present solid electrolyte from reacting with active materials during the production of batteries. Moreover, the negative electrode capable of stable charging and discharging can be formed even when using the negative active material with a low operating potential, such as graphite. Since the present solid electrolyte uses an Na element that is low in cost and has no resource risks, it is possible to provide an all-solid-state secondary battery that is low in cost and that can be supplied in large quantities.

As described previously, if the ratio of the amount of substance of $Na_2SO_4$ to the total of the amount of substance of $Na_3AlF_6$ and the amount of substance of $Na_2SO_4$ is lower than or equal to 85%, it is possible to more reliably make the present solid electrolyte has higher ion conductivity than $Na_3AlF_6$ as a single substance. This relationship is considered to also apply to the solid electrolyte expressed by a composition formula of $Na_{a+d}M_bX_cA_eO_f$ and generated from an arbitrary compound and arbitrary inorganic salt. When the ratio of the amount of substance of the above-described inorganic salt (e.g., $Na_2SO_4$) is 85%, $e/(c + e)$ in the above-described composition formula of $Na_{a+d}M_bX_cA_eO_f$ becomes 0.49. Accordingly, if the composition formula of $Na_{a+d}M_bX_cA_eO_f$ satisfies $0 < e/(c + e) \leq 0.5$, it is possible to more reliably make the present solid electrolyte have higher ion conductivity than $Na_aM_bX_c$ as a simple substance. As described previously, the solid electrolyte contains $Na_dA_eO_f$, where a to f are values that are greater than 0. Depending on the ion conductivity required in the solid electrolyte, $e/(c + e)$ may be greater than 0.5.

In order to further increase the ion conductivity by setting the ratio of the amount of substance of the above-described inorganic salt in the range of 15% to 85%, it is preferable that the composition formula of $Na_{a+d}M_bX_cA_eO_f$ satisfies $0.03 \leq e/(c + e) \leq 0.5$. In order to yet further increase the ion conductivity by setting the ratio of the amount of substance of the above-described inorganic salt in the range of 20 to 75%, it is preferable that the composition formula of $Na_{a+d}M_bX_cA_eO_f$ satisfies $0.04 \leq e/(c + e) \leq 0.33$.

Preferably, $Na_dA_eO_f$ is $Na_2SO_4$ or $NaPO_3$. This more reliably achieves high ion conductivity. In the case where $Na_dA_eO_f$ is $Na_2SO_4$, in the composition formula of $Na_{a+d}M_bX_cA_eO_f$, A is a sulfur element, and $d = 2e$ is satisfied. With consideration given to factors such as measurement errors, it is enough if $0.8d \leq 2e \leq 1.2d$ is satisfied, and preferably $0.9d \leq 2e \leq 1.1d$ is satisfied. In the case where $Na_dA_eO_f$ is $NaPO_3$, in the composition formula of $Na_{a+d}M_bX_cA_eO_f$, A is a phosphorus element, and $d = e$ is satisfied. With consideration given to factors such as measurement errors, it is enough if $0.8d \leq e \leq 1.2d$ is satisfied, and preferably $0.9d \leq e \leq 1.1d$ is satisfied. Moreover, $Na_aM_bX_c$ is preferably $Na_3AlF_6$. In other words, in the composition formula of $Na_{a+d}M_bX_cA_eO_f$, M is an aluminum element and X is a fluorine element. This more reliably achieves high ion conductivity.

As described previously, the composition formula of the present solid electrolyte is expressed as $Na_{a+d}M_bX_cA_eO_f$. For example, in the case where $Na_3AlF_6$ and $Na_2SO_4$ are mixed together, this composition formula is expressed as $Na_{a+d}Al_bF_cS_eO_f$. In the case where $Na_3AlF_6$ and $NaPO_3$ are mixed together, this composition formula is expressed as $Na_{a+d}Al_bF_cP_eO_f$. To identify whether an unknown solid electrolyte is the present solid electrolyte, chemical analysis is conducted on the unknown solid electrolyte to identify whether the unknown solid electrolyte contains Na, M, X, A, and O as its components, where M is an element serving as a trivalent cation, X is a halogen element, and A is a sulfur or phosphorus element. If the unknown solid electrolyte is composed of Na, M, X, A, and O and the values a to f in the molar ratio of the components are all greater than 0 and satisfy $0.8c \leq (a + 3b) \leq 1.2c$ and $1.6f \leq (d + n \times e) \leq 2.4f$, where n is 4 or 6 when A is a sulfur element and n is 5 when A is a phosphorus element, the unknown solid electrolyte can be said as the present solid electrolyte. If $0 < e/(c + e) \leq 0.5$ is satisfied, it can be said that the ratio of the amount of substance of the above-described inorganic salt to the total of the amount of substance of the above-described compound (e.g., $Na_3AlF_6$) and the amount of substance of the above-described inorganic salt (e.g., $Na_2SO_4$) is lower than or equal to 85%.

For example, Na, Al, S, and P can be quantitated by an ICP emission spectral analyzer, and F can be quantitated by ion chromatography. O can be quantitated by oxygen/nitrogen gas analysis. In the case where the present solid electrolyte contains an element M other than Al and an element X other than F, a measurement method capable of quantitating the elements M and X is appropriately selected.

In the above processing example, a case is described in which, after $Na_3AlF_6$ is generated by mixing NaF and $AlF_3$ in the ratio of 3:1, $Na_3AlF_6$ and $Na_2SO_4$ (or $NaPO_3$) are subjected to the mechanical milling process. Alternatively, NaF, $AlF_3$, and $Na_2SO_4$ (or $NaPO_3$) may be subjected to the mechanical milling process without generating $Na_3AlF_6$.

Fig. 6 is a flowchart showing another example of the production of the present solid electrolyte. In the present production example, NaF powder, $AlF_3$ powder, and $Na_2SO_4$ (or $NaPO_3$) powder are prepared (step S21). Then, the NaF powder, the $AlF_3$ powder, and the $Na_2SO_4$ (or $NaPO_3$) powder are mixed together and thereafter subjected to a mechanical milling process (step S22).

At this time, the ratio of the amounts of substance of NaF and $AlF_3$ may be other than 3:1. The ratio of the amount of substance of NaF to the total of the amounts of substance of NaF, $AlF_3$, and $Na_2SO_4$ is, for example, higher than or equal to 10% and lower than or equal to 80% and preferably higher than or equal to 30% and lower than or equal to 70%. The ratio of the amount of substance of $AlF_3$ is, for example, higher than or equal to 5% and lower than or equal to 60% and preferably higher than or equal to 10% and lower than or equal to 50%. The ratio of the amount of substance of $Na_2SO_4$ is, for example, higher than or equal to 2% and lower than or equal to 50% and preferably higher than or equal to 10% and lower than or equal to 40%. Through the above-described processing, it is possible to obtain the powder of the present solid electrolyte with high ion conductivity. The same also applies to the case in which $NaPO_3$ is used instead of $Na_2SO_4$.

Here, the ratio of the amounts of substance of Na, Al, and F in a mixture obtained by mixing only NaF and $AlF_3$ prepared in step S21 is expressed as a:b:c, where a to c are values greater than 0. In this case, Na, Al, and F are an univalent cation, a trivalent cation, and an univalent anion, respectively, and $a + 3b = c$ is satisfied. With consideration given to factors such as measurement errors, $0.8c \leq (a + 3b) \leq 1.2c$ is satisfied. Meanwhile, unlike in the case where $Na_3AlF_6$ is generated in advance, the ratio of the amounts of substance of NaF and $AlF_3$ is not limited to 3:1, and therefore $a = 3b$ is not always satisfied. In other words, even if $0.8a \leq 3b \leq 1.2a$ is not satisfied, it is possible to obtain the present solid electrolyte with high ion conductivity (and high-temperature stability).

In the production of the solid electrolyte shown in Fig. 6, as described previously, the present solid electrolyte is obtained by subjecting NaF, $AlF_3$, and $Na_2SO_4$ to the mechanical milling process. However, the raw materials for the present solid electrolyte are not limited to NaF, $AlF_3$, and $Na_2SO_4$ (or $NaPO_3$). The present solid electrolyte may be produced by mixing a first compound that is NaX, a second compound that is $MX_3$, and a third compound that is composed of Na, A, and O, where X is an arbitrary halogen element, M is an arbitrary element serving as a trivalent cation, and A is a sulfur or phosphorus element. In this case, in step S21 shown in Fig. 6, the first, second, and third compounds described above are prepared. In step S22, the first, second, and third compounds are subjected to a mechanical milling process to obtain the present solid electrolyte.

In the case where the ratio of the amounts of substance of Na, M, and X in a mixture of the first and second compounds and the amounts of substance of Na, A, and O in the third compound is expressed as a:b:c:d:e:f by using values a to f that are greater than 0, the mixture satisfies $0.8c \leq (a + 3b) \leq 1.2c$ as described previously. In the third compound, $1.6f \leq (d + n \times e) \leq 2.4f$ is satisfied as described previously, where n is 4 or 6 when A is a sulfur element, and n is 5 when A is a phosphorus element. In addition to NaF, other examples of the first compound NaX include NaCl and NaBr. In addition to $AlF_3$, other examples of the second compound $MX_3$ include $YF_3$, $LaF_3$, and $GaF_3$. In addition to $Na_2SO_4$ or $NaPO_3$, other examples of the third compound $Na_dA_eO_f$ include $Na_2SO_3$ (lithium sulfite) and $Na_3PO_4$ (lithium orthophosphate).

In the production of the solid electrolyte shown in Fig. 6 as well, it is possible to obtain the present solid electrolyte whose composition formula is expressed as $Na_{a+d}M_bX_cA_eO_f$ and which has high ion conductivity. It is also preferable that $0 < e / (c + e) \leq 0.5$ is satisfied. This more reliably achieves high ion conductivity. There are no particular limitations on the mixing ratio of the first compound NaX and the second compound $MX_3$, it is preferable that $0.1a \leq 3b \leq 10a$ is satisfied in order to more reliably achieve high ion conductivity.

The present solid electrolyte, the method of producing the present solid electrolyte, and the battery may be modified in various ways.

The present solid electrolyte may contain impurities and contain a component expressed by the composition formula of $Na_{a+d}M_bX_cA_eO_f$ as its principal component. The principal component refers to a component with a highest mass ratio among the components of the solid electrolyte. The mass ratio of the principal component in the solid electrolyte is preferably higher than or equal to 80% by mass and more preferably higher than or equal to 90% by mass. The present solid electrolyte may be mixed with other substances (which may include Na) and used as an electrolyte material. The mass ratio of the present solid electrolyte in the electrolyte material is preferably higher than or equal to 50% by mass, more preferably higher than or equal to 60% by mass, and yet more preferably higher than or equal to 70% by mass.

In the X-ray diffraction pattern obtained from the present solid electrolyte, the half-value width of peak detected within the range of the diffraction angle of $2\theta$ from 31° to 35° may be less than 0.4°.

The solid electrolyte layer 13 may contain substances other than the present solid electrolyte. The present solid electrolyte used in the all-solid-state secondary battery 1 does not necessarily have to be contained in all of the positive electrode 11, the negative electrode 12, and the solid electrolyte layer 13, and may be contained in at least one of the positive electrode 11, the negative electrode 12, or the solid electrolyte layer 13. The present solid electrolyte may be used in batteries other than all-solid-state secondary batteries, and may be used for purposes other than batteries. The production of the present solid electrolyte may be conducted by a process other than the mechanical milling process.

The configurations of the above-described preferred embodiment and variations may be appropriately combined as long as there are no mutual inconsistencies.

While the invention has been shown and described in detail, the foregoing description is in all aspects illustrative and not restrictive. It is therefore understood that numerous modifications and variations can be devised without departing from the scope of the invention.

**REFERENCE SIGNS LIST**

| | |
|---|---|
| 1 | all-solid-state sodium-ion secondary battery |
| 11 | positive electrode |
| 12 | negative electrode |
| 13 | solid electrolyte layer |
| S11, S12, S21, S22 | step |

**Claims**

1. A solid electrolyte composed primarily of a component expressed by a composition formula of $Na_{a+d}M_bX_cA_eO_f$ by using values a to f that are greater than 0, where M is an element serving as a trivalent cation, X is a halogen element, and A is a sulfur element or a phosphorus element,
   wherein $0.8c \leq (a + 3b) \leq 1.2c$ and $1.6f \leq (d + n \times e) \leq 2.4f$ are satisfied, where n is 4 or 6 when A is a sulfur element, and n is 5 when A is a phosphorus element.

2. The solid electrolyte according to claim 1, wherein

$$0 < e/(c + e) \leq 0.5$$

   is satisfied in said composition formula.

3. The solid electrolyte according to claim 1, wherein
   in said composition formula, $0.8d \leq 2e \leq 1.2d$ is satisfied when A is a sulfur element, or $0.8d \leq e \leq 1.2d$ is satisfied when A is a phosphorus element.

4. The solid electrolyte according to claim 1, wherein
   in said composition formula, A is a sulfur element and n is 6.

5. The solid electrolyte according to claim 1, wherein
   in said composition formula, M is an aluminum element and X is a fluorine element.

6. The solid electrolyte according to claim 1, wherein
   in measurement conducted by an X-ray diffractometer using a $CuK\alpha$ ray, a half-value width of a peak detected within a range of $2\theta$ from 31° to 35° is greater than or equal to 0.4°.

7. A method of producing a solid electrolyte, comprising:

   a) preparing a compound expressed by a composition formula of $Na_aM_bX_c$ and a compound expressed by a composition formula of $Na_dA_eO_f$ by using values a to f that are greater than 0, where M is an element serving as a trivalent cation, X is a halogen element, A is a sulfur element or a phosphorus element, the values a to f satisfy $0.8c \leq (a + 3b) \leq 1.2c$ and $1.6f \leq (d + n \times e) \leq 2.4f$, n is 4 or 6 when A is a sulfur element, and n is 5 when A is a phosphorus element; and
   b) subjecting $Na_aM_bX_c$ and $Na_dA_eO_f$ to a mechanical milling process,

   wherein, in said operation b), a ratio of the amount of substance of $Na_dA_eO_f$ to a total of the amount of substance of $Na_aM_bX_c$ and the amount of substance of $Na_dA_eO_f$ is lower than or equal to 85%.

8. A method of producing a solid electrolyte, comprising:

   a) preparing a first compound that is NaX, a second compound that is $MX_3$, and a third compound composed of Na, A, and O, where X is a halogen element, M is an element serving as a trivalent cation, and A is a sulfur element or a phosphorus element; and
   b) subjecting said first compound, said second compound, and said third compound to a mechanical milling process,

wherein, in said operation a), 0.8c ≤ (a + 3b) ≤ 1.2c and 1.6f ≤ (d + n × e) ≤ 2.4f are satisfied when a ratio of the amounts of substance of Na, M, and X in a mixture of said first compound and said second compound and the amounts of substance of Na, A, and O in said third compound is expressed as a:b:c:d:e:f by using values a to f that are greater than 0, where n is 4 or 6 when A is a sulfur element, and n is 5 when A is a phosphorus element, and

$$0 < e/(c + e) \le 0.5$$

is further satisfied.

9. The method of producing a solid electrolyte according to claim 7 or 8, wherein

$$0.8d \le 2e \le 1.2d$$

is satisfied when A is a sulfur element, or

$$0.8d \le e \le 1.2d$$

is satisfied when A is a phosphorus element.

10. The method of producing a solid electrolyte according to claim 7 or 8, wherein A is a sulfur element, and n is 6.

11. The method of producing a solid electrolyte according to claim 7 or 8, wherein M is an aluminum element, and X is a fluorine element.

12. A battery comprising:

a positive electrode;
a negative electrode; and
an electrolyte layer provided between said positive electrode and said negative electrode,
wherein the solid electrolyte according to any one of claims 1 to 6 is contained in at least one of said positive electrode, said negative electrode, or said electrolyte layer.

FIG. 1

$\underline{1}$

111 ← 11
112
13
122
121 ← 12

FIG. 2

START

PREPARE Na3AlF6 POWDER AND Na2SO4 POWDER — S11

PERFORM MECHANICAL MILLING PROCESS — S12

END

FIG. 3

R1

$2\theta$ [deg]

FIG. 4

FIG. 5

FIG. 6

## INTERNATIONAL SEARCH REPORT

International application No.

**PCT/JP2023/035746**

### A. CLASSIFICATION OF SUBJECT MATTER

**H01B 1/08**(2006.01)i; **H01B 13/00**(2006.01)i; **H01M 10/0562**(2010.01)i
FI: H01B1/08; H01B13/00 Z; H01M10/0562

According to International Patent Classification (IPC) or to both national classification and IPC

### B. FIELDS SEARCHED

Minimum documentation searched (classification system followed by classification symbols)

H01B1/08; H01B13/00; H01M10/0562

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2018-536266 A (BROADBIT BATTERIES OY) 06 December 2018 (2018-12-06) entire text, all drawings | 1-12 |
| A | JP 2023-48155 A (SAMSUNG ELECTRONICS CO., LTD.) 06 April 2023 (2023-04-06) entire text, all drawings | 1-12 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **24 November 2023** | **12 December 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/035746**

| Patent document cited in search report | | | Publication date (day/month/year) | Patent family member(s) | | | Publication date (day/month/year) |
|---|---|---|---|---|---|---|---|
| JP | 2018-536266 | A | 06 December 2018 | US | 2018/0331387 | A1 | |
| | | | | entire text, all drawings | | | |
| JP | 2023-48155 | A | 06 April 2023 | US | 2023/0094366 | A1 | |
| | | | | entire text, all drawings | | | |

Form PCT/ISA/210 (patent family annex) (January 2015)

**REFERENCES CITED IN THE DESCRIPTION**

**Patent documents cited in the description**

- JP 2023048155 A
- JP 7230772 B
- WO 2022210482 A